# EUROPEAN PATENT APPLICATION

(11) **EP 2 052 953 A2**
(43) Date of publication of application: **29.04.2009**
(21) Application number: 08167607.4
(22) Date of filing: 27.10.2008
(51) Int. Cl.: B62D 59/02

(54) **Powered axle for the motion of trailers and similar static machines**

(30) Priority: 26.10.2007 IT PG20070062
(71) Applicant: Gavarini S.r.l., 06010 Città Di Castello (PG) (IT)
(72) Inventor: Gavarini, Marco, 06012, Città di Castello (PG) (IT); Gavarini, Massimo, 06012, Città di Castello (PG) (IT)
(74) Representative: Papa, Elisabetta

(57) **Abstract**

A powered axle (1) for the motion of trailers (G) and similar static machines, comprising a main chassis (2); wheels (4,4',4") engaged with the chassis (2); a generating and feeding unit (5), apt to deliver the energy required to produce the movement of the car (1) on the ground and to its operation, and movable means (20) for coupling the car (1) with a trailer (G) to be moved; the car (1) further comprising an apparatus (80) for the articulated connection to the chassis (2) of the movable coupling means (20), comprising a fifth wheel (8) hinged to the chassis (2) substantially at the height of the axis of rotation of the wheels (4,4',4"), the fifth wheel (8) having a first bottom end for connecting to the pin (10) of bilateral rotation (γ) about an axis of rotation (B-B), substantially perpendicular to the axis of rotation of the wheels (A-A), so that to the rotation of the pin (8) there corresponds a proportional variation of tilt of said movable coupling means (20) with respect to the ground plane; and a second top end (22) for the rotating coupling with an angle of rotation (β) to the movable coupling means (20); the car (1) further comprising independent driving means, each of them being suitable for the drive of respective wheels (4,4',4"), so that to a differential rotation of the wheels (4',4") there corresponds a proportional rotation (β) of the movable coupling means (20) relative to the chassis (2), about a substantially longitudinal axis (B-B) of the pin (10).

## Description

The present invention refers to a powered axle for the motion of trailers and similar static machines, and specifically for elevating yard machines such as cranes and the like.

This typology of powered axle finds application in the field of yard machines, earth-moving machines and of industrial and civil constructions, and typically in the building industry field for the motion of cranes and other equipment, used e.g. in the building of dwelling houses.

In the current state of the art, in the reference field of yard machines, self-moving cars for the driving and motion of trailers and similar static machines are known, which however do not effectively associate to the strength and safety of the coupler a corresponding manoeuvrability and autonomy of motion.

Such a drawback is highlighted in a manner particularly unfavourable, as well as detrimental to a correct operation, when having to intervene on yards of difficult access, limited extension and reduced width, or anyhow in cramped spaces and on irregular grounds.

Typically, said conditions occur when the yard is set up; in such a case it is quite frequent to incur into problems of interference of yard machines with the pre-existing constructions, even establishing the insurmountable impossibility of driving, on the site singled out, vehicles apt to carry out the envisaged work intervention.

Moreover, current yard machines, referring in particular to self-moving cars for the towing of trailers and similar static machines, have no effective devices fostering agility, effectiveness of motion and versatility in facing the wide range of situations that can occur in the motion of trailers and similar static machines, both inside yards and in transfers.

Currently marketed self-moving cars for the towing of trailers and similar static yard machines and the like, do not stand out for broad versatility of modes and positions for coupling to a trailer.

Moreover, solutions of anchoring to a trailer are not generally such as to ensure a grip that is safe, lasting and useful to a rational allocation of loads.

In fact, usually a strain concentration is created on the point of coupling between self-moving car and trailer.

Instead, it would be advisable, in order to optimize its structural sturdiness, to design the connection so that strains be discharged and distributed on more extended mechanical parts.

In the known art there is no self-moving car for the motion of trailers and similar static machines allowing easy coupling, stable towing and, concomitantly, intervention also on unfavourable ground conditions, on yards of difficult access and/or cramped.

Hence, object of the present invention is to solve said problems, by proposing a powered axle for the motion of trailers and similar static machines as defined in claim 1.

Advantageously, the powered axle according to the present invention accommodates stresses deriving by the state of the area of intervention, moreover exhibiting a high mobility on-yard, on excavation and generally on any ground condition in the worksite.

The powered axle according to the present invention is equipped with a compact and reliable system for the connection to a trailer, integrating simple, sturdy mechanical linkages designed so as to ensure a wide range of anchoring modes and positions.

The agility of the axle according to the present invention further allows an extended operative manoeuvrability even when leeway for intervention is minimal, even approaching close to a wall.

The steering system of the powered axle according to the present invention and the flexibility of orientation of the means for coupling with a trailer ensure optimal circulation.

The technical solution contrived for carrying out an adjustable connection between the chassis of the axle and means for coupling the axle with a trailer to be towed is such as to minimize breakage and maintenance frequency.

Thanks to its versatility and simplicity of manufacturing, the axle according to the present invention easily adjusts to the pre-existing structure of any type and configuration of trailer, entailing no substantial and demanding modifications to said coupling means.

Further advantages, as well as the features and the operation modes of the present invention will be made apparent from the following detailed description of a preferred embodiment thereof, given by way of example and not for limitative purposes. Reference will be made to the figures of the annexed drawings, wherein:
- Fig. 1 is a perspective view of a preferred embodiment of the powered axle according to the present invention, when in an operative configuration of coupling to a trailer;
- Fig. 2 is a partially sectional perspective view of the powered axle of Fig. 1, when in a configuration uncoupled from the trailer, apt to highlight the integrated mechanisms thereof;
- Fig. 3 is a horizontal view of the powered axle of Fig. 2, wherein it is exemplified the mobility of means for coupling the axle with said trailer;
- Fig. 4 is a top view of the powered axle of Fig. 2;
- Fig. 5 is a top view of the powered axle of Fig. 2, in which there are highlighted the motions of the wheels of the axle itself;
- Fig. 6 is a perspective view of a portion of the powered axle of Fig. 2, apt to highlight structure and degrees of freedom thereof;
- Fig. 7 is a perspective view of the connection between the chassis of the self-moving car of Fig. 2 and the coupling means of Fig. 3;

To describe the present invention, hereinafter reference will be made to the above-indicated figures.

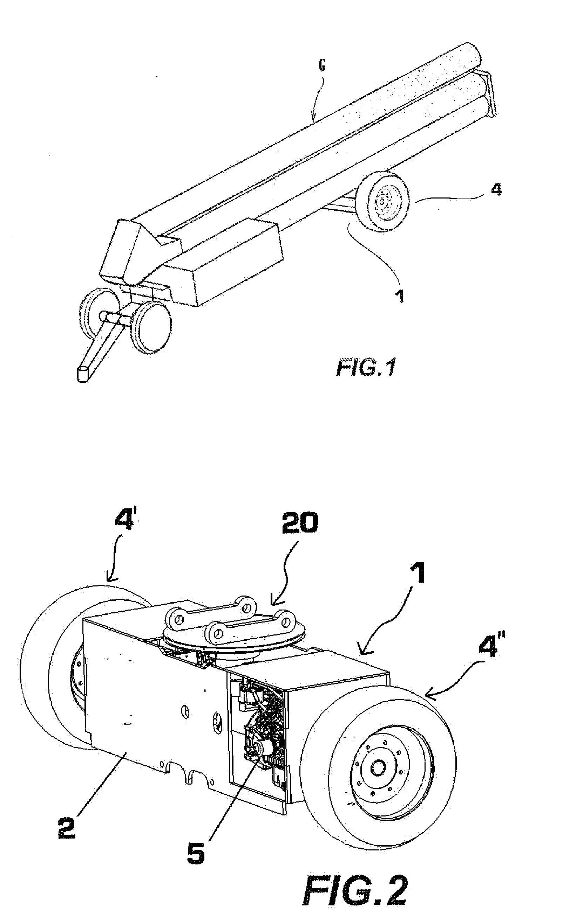

As it may be observed in Fig. 2, a powered axle 1 for the motion of trailers G and similar static machines according to the present invention comprises a main chassis 2 and wheels 4 engaged with the chassis 2.

The energy required to produce the movement of the axle 1 on the ground, and to its operativeness, is delivered by a generating and feeding unit 5, housed on the chassis 2 between the movable means (20) for coupling and said wheels (4);

The generating and feeding unit 5 typically comprises main driving means, e.g. electric or endothermic, for generating the energy required for car operation.

This energy is usable by service using means, by actuating means and then by secondary driving means, e.g. oil-dynamic engines for the driving of the wheels 4. Such secondary driving means may use energy even from generating and feeding units external to the main chassis 2, in case a particularly agile and light-weight powered axle is needed.

Among service using means there may be envisaged working machines, like, e.g., pumps, coupled to a circuit for regulating, transferring and converting energy produced by the main engines.

For instance, a primary engine may be connected to a pump that is coupled to a fluid-dynamic circuit in which a fluid flow, collected from and reconducted to a tank, allows the transfer, regulation and distribution of energy in fluid form.

This energy is finally converted into mechanical energy by end actuators, e.g. oil-dynamic engines associated to the wheels 4.

Moreover, said actuating means may comprise telescopic pistons, e.g. hydraulic, oil-dynamic or pneumatic ones.

The powered axle 1 according to the present invention further comprises movable means 20 for coupling the car with a trailer G to be moved.

As depicted in Fig. 2, and in detail in Fig. 7, the axle 1 further comprises an apparatus 80 for the articulated connection to the chassis 2 of said movable coupling means 20.

The apparatus 80 for the articulated connection comprises a fifth wheel 8 hinged to the pin 10 substantially at the center between the wheels 4.

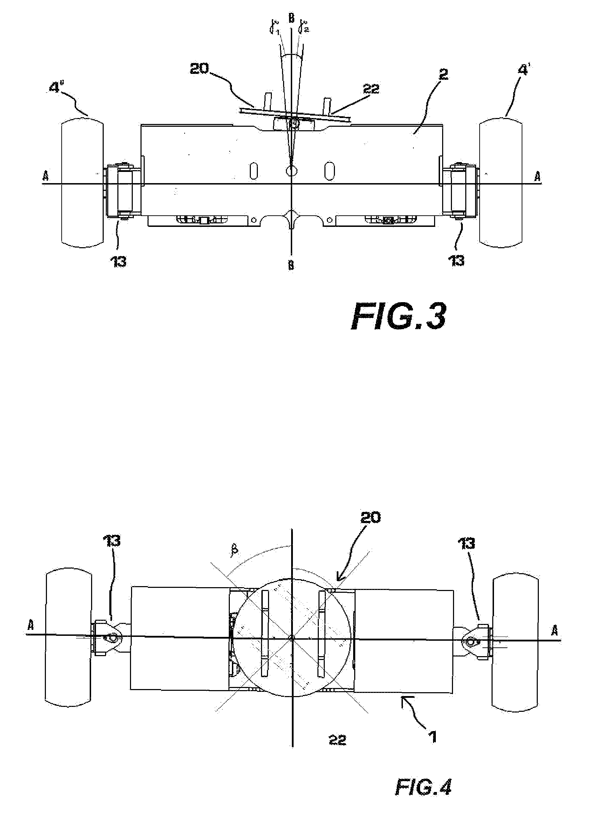

The fifth wheel 8 is capable of rotating of an angle β with respect to an axis of rotation B-B, substantially perpendicular to the axis of rotation A-A of the wheels 4, i.e. substantially vertical with respect to the ground plane (Fig. 3).

The pin 10 rotates bilaterally of an angle γ about axis B-B; thus, to the rotation of the pin 10 there corresponds a proportional variation of tilt of the movable coupling means 20 with respect to the axis of rotation B-B.

Such coupling means 20 allow the compensating for ground irregularities, possible gradients and the balancing, optionally cushioned, of the rotating connection between trailer G and car 1 when these are in a towing operative configuration, so as to allow the relative rotation thereof. Thus, the tilt of the movable coupling means 20 with respect to the ground plane may be varied, as it may be inferred from Fig. 3, in a width range substantially of from 0° to 15°.

Therefore, the angles γ 2, γ 1 may assume values ranging from 0° to 15°.

The width of the arcs that the movable coupling means 20 can describe when tilting by said modes, descends from the adopted constructive solution of advantageously hinging the pin 10 substantially at the height of the axis of rotation A-A of the wheels 4.

The coupling flange 22 may be removable, thereby being interchangeable, according to the configuration of a respective counterflange of the trailer G that, for each specific case, has to be towed.

The powered axle 1 according to the present invention may further comprise independent driving means, each of them being suitable for the drive of respective wheels 4, so that to a differential rotation of the wheels there corresponds a proportional rotation of the movable coupling means 20 relative to the chassis 2, about axis B-B.

With regard to the preferred embodiment of the present invention detailed here, the main train of tires of the powered axle 1 comprises a pair of wheels 4',4" on respective opposite sides of the chassis 2.

Each wheel of said pair of wheels 4',4" is preferably moved by a respective independent engine.

A joint rotation of the wheels 4',4" with respectively different speeds, produces a proportional steering.

Following a joint rotation of the wheels 4',4" with respective opposite-sign speeds, or as a consequence of a rotation in a mutually opposite sense of the wheels 4',4", the car 1 acquires a spinning motion.

Such a spinning option advantageously allows the axle 1 according to the present invention to assume, substantially remaining in place, positions that are transversal with respect to the trailer, and then to follow substantially curved paths.

There ensues a remarkable steering agility of the axle 1 according to the present invention.

In order to increase its agility, broaden its versatility of use and vary the space engaged on the carriageway, the powered axle 1 according to the present invention may be equipped with steering means 13 as depicted in Fig 4, not further described, as being means belonging to the state of the art.

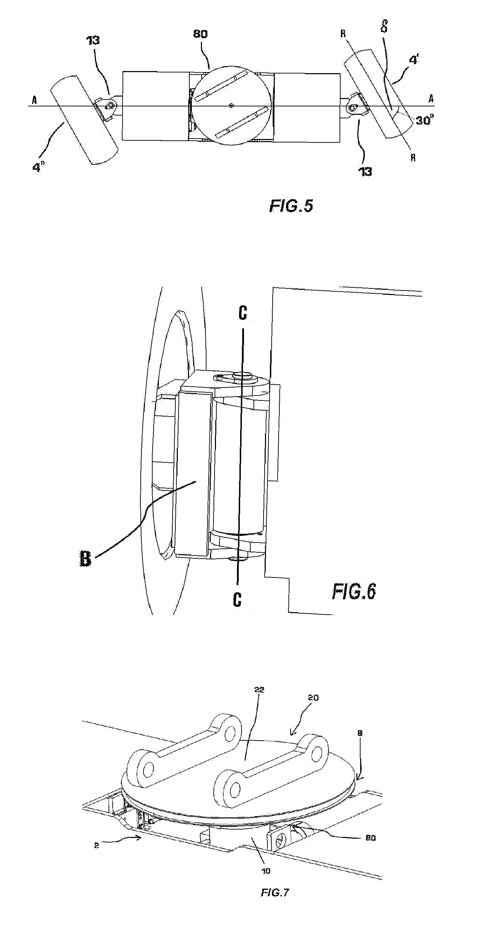

The steering means 13 rotates about a vertical axis C-C thereof and substantially perpendicular to the ground. Said steering means rotate the transversal axis R-R of the wheel (Fig. 5) of an angle δ ranging from -30° and 30°, considering 0° when the axis R-R is perpendicular to the axis A-A.

Thus, it is obtained, with a proportional rotation of the axle with the movable coupling means 20 and the steering of the wheels by the steering means 13, a path proportionally transversal to the sum of the angle β of rotation of the movable coupling means 20 and the angle δ (Fig. 5).

Such a synchronism can allow the varying of the space engaged on the carriageway by the axle and therefore the disengagement in narrow passages of the same, alone or coupled to the trailer G.

The powered axle 1 according to the present invention can be remotely controlled, e.g. via a radio, by an operator who, by remotely acting on a related control unit, may arrange for its manoeuvres, as well as for the modes of coupling to the trailer G and of entailed towing/moving thereof.

According to a further embodiment, by effecting suitable structural modifications, in lieu of the wheels 4 there may be used tracks for the movement of the car 1 onto the ground.

The present invention has hereto been described according to a preferred embodiment thereof, given by way of example and not for limitative purposes.

To the above-described powered axle 1 for the motion of trailers G and similar static machines, a person skilled in the art, in order to satisfy further and contingent needs, may effect several further modifications and variants, all however encompassed within the protective scope of the present invention, as defined by the appended claims.

## Claims

1. A powered axle (1) for the motion of trailers (G) and similar static machines, comprising:
- a main chassis (2);
- wheels (4) engaged with said chassis (2);
- a generating and feeding unit (5), apt to deliver the energy required to produce the movement of said axle (1) on the ground and to its operation, housed inside of said chassis (2) between the movable means (20) for coupling and said wheels (4);
- movable means (20) for coupling said axle (1) with a trailer (G) to be moved;
said axle (1) further comprising an apparatus (80) for the articulated connection to said chassis (2) of said movable coupling means (20), comprising a fifth wheel (8) hinged to said chassis (2) substantially at the center between the wheels (4), said movable coupling means (8) having:
• a first bottom end (10), pin for connecting a chassis (2) of bilateral rotation (γ) of said fifth wheel (8) about an axis of rotation (B-B), substantially perpendicular to the axis of rotation of said wheels (A-A), so that to the rotation of said fifth wheel (8) there corresponds a proportional variation of tilt of said movable coupling means (20) with respect to the ground plane; and
• a second top end, rotating coupling flange (22), capable of rotating of an angle β about axis B-B;
said axle (1) further comprising independent driving means, each of them being suitable for the drive of respective wheels (4,4',4"), so that to a differential rotation of said wheels (4',4") there corresponds a proportional rotation (β) of said movable coupling means (20) relative to said chassis (2), about a substantially longitudinal axis (B-B) of the pin (10).

2. The powered axle (1) according to claim 1, wherein said fifth wheel (8) for the bilateral rotation (β) of said pin (8) about said axis of rotation (B-B) respectively determine swinging (γ₂,γ₁) of said fifth wheel (8), in a width range substantially ranging from 0° to 15°.

3. The powered axle (1) according to one of the claims 1 to 2, wherein said rotating coupling flange (22) is capable of rotating of an angle β about axis B-B with a substantially rigid coupling with said trailer (G).

4. The powered axle (1) according to one of the claims 1 to 3, comprising a pair of wheels (4',4").

5. The powered axle (1) according to one of the claims 1 to 4, wherein said pair of wheels (4',4") connected to steering means (13) rotate about a vertical axis C-C thereof and substantially perpendicular to the ground of an angle δ ranging from -30° and 30°, considering 0° when the axis R-R of the wheel is perpendicular to the axis A-A.

6. The powered axle according to claim 4, wherein said pair of wheels (4',4") are moved by respective independent engines, a joint rotation of said wheels (4',4") with respective opposite-sign speeds producing a proportional steering thanks to the movable coupling means.

7. The powered axle according to claim 4 or 5, wherein said pair of wheels (4',4") are moved by respective independent engines, a joint rotation of said wheels (4',4") in a mutually opposite sense producing a spinning motion of said car 1.

8. The powered axle (1) according to one of the claims 1 to 6, wherein said movable coupling means (20) comprises:
- a fifth wheel (8) hinged to said pin (10) ; and
- a coupling flange (22) at said trailer (G).

9. The powered axle (1) according to one of the claims 1 to 8, wherein said coupling flange (22) is detachable and interchangeable according to the configuration of a respective counterflange of said trailer G.

10. The powered axle (1) according to one of the claims 1 to 9, which can be remote-controlled.
